# EUROPEAN PATENT APPLICATION

(11) **EP 4 390 516 A1**
(43) Date of publication of application: **26.06.2024**
(21) Application number: 22216585.4
(22) Date of filing: 23.12.2022
(51) Int. Cl.: G02C 7/02

(54) **SPECTACLE LENS DESIGN DATA AND METHOD FOR MANUFACTURING A SPECTACLE LENS**

(71) Applicant: Carl Zeiss Vision International GmbH, 73430 Aalen (DE)
(72) Inventor: GERLACH, Mario, 16548 Glienicke-Nordbahn (DE)
(74) Representative: Tautz & Schuhmacher

(57) **Abstract**

Provided is spectacle lens related to a wearer. The spectacle lens has a refractive power and at least partly a diffractive add power and provides a central region having a first diffractive add power and being adjusted for emmetropia of the wearer. The spectacle lens further provides a peripheral region arranged radially outside of the central region, wherein the peripheral region has a second diffractive add power and is adjusted to provide a focus in at least one of in front of the retina of the wearer or behind the retina of the wearer. The spectacle lens design data is adjusted such that the spectacle lens further exhibits a first blending region arranged between the central region and the peripheral region, wherein the first blending region is adapted to adjust a diffraction efficiency from the first diffractive add power to the second diffractive add power in a radially outward direction.

## Description

Provided are embodiments of a spectacle lens design data for the purpose of a use of the spectacle lens design data for a manufacture of a spectacle lens related to a wearer, a data set in the form of a computer-readable data signal, a data signal carrying the data set according to the disclosure, a method for manufacturing a spectacle lens, and a spectacle lens related to a wearer. The embodiments are, thus, related to spectacle lenses.

Myopia, i.e., nearsightedness, can be observed to be on the increase worldwide. In Asia, in particular, a significant increase in the number of people with nearsightedness is to be observed. Myopia denotes a refractive error in which the image of an object located at infinite distance arises in a plane in front of the retina in the case of a relaxed accommodation of the eye and the light falling onto the retina correspondingly represents an out-of-focus image. Often, myopia is a refractive error that deteriorates over time by virtue of the ametropic eye becoming ever longer over time and the image plane therefore distancing itself ever further from the retina.

The etiology of myopia is considered to have many factors and the mechanisms of the errant axial length growth of the eyeball are still not comprehensively understood. Therefore, myopia previously has been regarded as incurable or irreversible. Here, correcting myopia by means of spectacle lenses or refractive corneal surgery may be considered as fighting the symptoms since the errant axial length growth of the eyeball is not reversed.

The prior art has disclosed various approaches for controlling the development of myopia or the advance of myopia, for instance the use of bifocal spectacle lenses and progressive power spectacle lenses, particularly for children, hard, gas-permeable contact lenses for children, orthokeratological (ortho-k) contact lenses, local applications of medicaments for controlling the accommodation, visual training or else maximizing the time spent outdoors. Although some of these known approaches may slow down the advance of myopia in certain cases, none of these known approaches are able to result in a verifiable effect for the complete removal of myopia or the complete stop of the advance of myopia.

Apart from treatments using medication, for instance Atropine or Pirenzepine, which are not unproblematic due to side effects, particularly for children, orthokeratology (ortho-k) is one of the most effective known approaches for slowing down the advance of myopia. On account of the flattening of the cornea, and the corneal profile connected therewith, caused by the ortho-k contact lens, the prevailing opinion is that a change in the peripheral retinal refraction pattern is a reason for the effect of ortho-k lenses on the advance of myopia and the axial length growth of the eyeball. However, an ortho-k treatment is also connected to risks, for instance microbial keratitis, corneal discoloring, epithelial iron deposition, pronounced fibrillar stripes and changes in the biomechanical properties of the cornea. Moreover, a promising application of ortho-k contact lenses requires a very good fit of the contact lenses, strict observance of the use and cleaning prescriptions, regular routine check-ups and comprehensive and suitable treatment of the eye in the case of complications. Additionally, there may be ethical concerns in respect of the application of contact lenses for child patients, which cause a significant deformation of the cornea overnight and which have permanent effects on the oxygen supply of the cornea.

WO 2004/107024 A1 describes a method and an apparatus for controlling optical aberrations to alter modulation transfer functions by providing an ocular system comprising a predetermined corrective factor to produce substantially corrective stimuli for repositioning medium- and high-spatial frequency peaks relative to one another to alter accommodative lag.

WO 2005/055891 A1 describes a method and an apparatus for controlling optical aberrations to alter a relative curvature of a field.

WO 2006/124198 A1 describes a multifocal ophthalmic lens including a lens element having anterior and posterior surfaces with a central aspherical refractive zone disposed on one of the anterior and posterior surfaces, and a diffractive bifocal zone disposed outside of the aspherical refractive zone. The central aspherical refractive zone may be disposed on the anterior surface and the diffractive bifocal zone may be disposed on the posterior surface.

WO 2021/181304 A1 describes an ophthalmic lens for treating myopia comprising: a base lens with a front surface, a back surface, and a first power profile selected to correct or substantially correct for a distance refractive error of the eye; one or more myopia control elements on at least one of the front and back surfaces of the lens; a first viewing region having a dimension selected based, at least in part, on a concentration of a pharmaceutical agent for use in conjunction with an ophthalmic lens, the first viewing region being configured to minimize, reduce and/or eliminate vision disturbances for distance vision; and a second viewing region comprising a power profile that is relatively more positive compared to the first viewing region; wherein at least one of the size of the second viewing region and the relatively more positive power of the second viewing region is selected based, at least in part, on the concentration of the pharmaceutical agent. The lens appears to be used in combination with medication.

WO 2007/041796 A1 describes an ophthalmic lens element for correcting myopia in a wearer's eye. The lens element includes a central region and a peripheral region. The central region provides a first optical correction for substantially correcting myopia associated with the foveal region of the wearer's eye. The peripheral region surrounds the central region and provides a second optical correction for substantially correcting myopia or hyperopia associated with a peripheral region of the retina of the wearer's eye.

CN104678572 describes a glass lens. The glass lens can show the function of inhibiting the development of ametropia of the eyes and simultaneously can ensure full visibility and good wearing feel. The glass lens comprises first refraction areas and second refraction areas, wherein each first refraction area has first refraction force based on a prescription for correcting the ametropia of the eyes; each second refraction area has refraction force different from the first refraction force and has the function of focusing pictures on the positions except the retina of the eyes to inhibit the development of the ametropia of the eyes, wherein near the central part of the lens, the second refraction areas form a plurality of independent island-shaped areas, and the first refraction areas form the areas beyond the areas of the second refraction areas.

US 10268050 B2 describes a spectacle lens which can inhibit ametropia of the eyes and ensure full visibility. The spectacle lens comprises: first refraction areas and second refraction areas. Each first refraction area has a first refraction force that may be based on a prescription for correcting the ametropia of the eyes. Each second refraction area has a refraction force different from the first refraction force and may function to focus images on the positions except the retina of the eyes, to inhibit the development of the ametropia. Near the central part of the lens, the second refraction areas form a plurality of independent island-shaped areas, and the first refraction areas form the areas beyond the areas of the second refraction areas.

EP 3759548 A1 describes a lens element intended to be worn in front of an eye of a person that includes a refraction area having a refractive power based on a prescription for the eye of the person, and a plurality of at least three non-contiguous optical elements, at least one optical element having a non-spherical optical function.

WO 2014/198972 A1 describes a lens that can be implemented both as a contact lens and as an intraocular lens, the thickness of the lens being in both cases obtained by an iteration process and being dependent on an aperiodic and ordered staircase function Gs(u), where S is the number of iterations and is equal to or lower than 2. The contact lens is used in the control of myopia. The lens production method starts from a given refractive lens and includes modifying the surface of the lens by means of the staircase function Gs(u), where S is equal to or lower than 2. The lens may have a central refractive zone and a peripheral diffractive zone.

Although WO 2014/198972 A1 is related to a different technical field, which is contact lenses and intraocular lenses, it may be considered as closest prior art for the claimed subject matter.

The subject-matter of claim 1 distinguishes from WO 2014/198972 A1 at least in the fact that a spectacle lens is claimed and in the further distinguishing feature, according to which the spectacle lens comprises a first blending region arranged between the central region and the peripheral region, wherein the first blending region is adapted to adjust a diffraction efficiency from the first diffractive add power to the second diffractive add power in a radially outward direction.

In view of the closest prior art and the distinguishing features, the objective technical problem may be considered as applying multifocal hybrid diffractive-refractive design for myopia control to a spectacle lens.

This problem is solved by a spectacle lens, a data set in the form of a computer-readable data signal, a data signal carrying the data set according to the disclosure, a computer readable storage medium having stored thereon a data set according to the disclosure, and a method for generating a spectacle lens design data for a spectacle lens. Optional embodiments are provided in the dependent claims and the description.

In one aspect, spectacle lens is provided. The spectacle lens has a refractive power and at least partly a diffractive add power and provides a central region having a first diffractive add power and being adjusted for emmetropia of the wearer. Moreover, the spectacle lens design data is adjusted such that the spectacle lens has a peripheral region arranged radially outside of the central region, wherein the peripheral region has a second diffractive add power and is adjusted to provide a focus in front of the retina of the wearer and/or behind the retina of the wearer. The spectacle lens design data is characterized in being adjusted such that the spectacle lens further exhibits a first blending region arranged between the central region and the peripheral region, wherein the first blending region is adapted to adjust a diffraction efficiency from the first diffractive add power to the second diffractive add power in a radially outward direction.

A solution for the problem described above is achieved in full by the features described in the foregoing paragraph.

However, a skilled person starting from the closest prior art with the task of solving the objective technical problem would merely provide a central refractive region and a peripheral diffractive region at a spectacle lens to a spectacle lens using the multifocal hybrid diffractive-refractive approach for myopia control. However, the skilled person would not get any motivation for providing a blending zone. Thus, this approach would solve the objective technical problem but deviate from the subject-matter of claim 1. Hence, this approach does not render the subject-matter of claim 1 obvious.

Moreover, a data set in the form of a computer-readable data signal is provided. The data set comprises at least one kind of the following kinds of data: (i) a virtual representation of the spectacle lens configured for manufacturing the spectacle lens according to the disclosure, and (ii) data containing computer-readable instructions for controlling one or more manufacturing machines to manufacture the spectacle lens according to the disclosure.

Furthermore, a data signal carrying the data set according to the disclosure.

In addition, a computer-readable storage medium having stored thereon a data set according to disclosure is provided.

Moreover, a method being configured for generating by computer means a spectacle lens design data for a spectacle lens is provided, the spectacle lens design data being adjusted such that the spectacle lens has a refractive power and at least partly a diffractive add power and providing a central region having a first diffractive add power and being adjusted for emmetropia of the wearer, and a peripheral region arranged radially outside of the central region, wherein the peripheral region has a second diffractive add power and is adjusted to provide a focus in at least one of in front of the retina of the wearer or behind the retina of the wearer. The spectacle lens design data is characterized in being adjusted such that the spectacle lens further exhibits a first blending region arranged between the central region and the peripheral region, wherein the first blending region is adapted to adjust a diffraction efficiency from the first diffractive add power to the second diffractive add power in a radially outward direction. The method may be further configured to manufacture a spectacle lens using the spectacle lens design data.

A spectacle lens may satisfy the specifications of section 3.5.2 of
ISO 13666:2019(E)). In particular, a spectacle lens may be an ophthalmic lens according to section 3.5.1 of ISO 13666:2019(E) to be worn in front of, but not in contact with, the eyeball.

Spectacle lens design data may be any kind of information which enables the manufacturing for a spectacle lens having the specifications as provided by the spectacle lens design data. In particular, the design data may include information regarding a geometrical shape of the front surface, a back surface and optionally an edge contour. Moreover, the design data may include information regarding one or more materials, of which the spectacle lens may consist or which the spectacle lens may comprise. Moreover, the design data may include information regarding various parameters specifying the spectacle lens, such as a refractive index, one or more diffractive structures or patterns applied to the spectacle lens, centration information, such as centration points, vision points, a position and/or appearance of at least one optical mark and/or any other characteristics beneficial for manufacturing the spectacle lens.

Throughout the disclosure, the properties explained for and disclosure provided for a spectacle lens shall be considered as being explained and disclosed for a spectacle lens design and spectacle lens design data and vice versa.

The wearer may be a person suffering from ametropia and in particular from myopia, wherein the spectacle lens design data and a spectacle lens manufactured according to the spectacle lens design data is provided for treating at least partly the ametropia when worn by the wearer. The spectacle lens design may in particular provide a refractive and diffractive add power for at least partly compensating and/or treating the ametropia. In particular, the wearer may suffer from myopia and one of the purposes of the spectacle lens design data and a corresponding spectacle lens may be mitigating and/or slowing down a progression of the myopia.

The central region of the spectacle lens may be arranged at the center of the spectacle lens. The center of the spectacle lens may correspond to an optical center of the spectacle lens according to section 3.2.15 of ISO 13666:2019(E).

As generally used, the term "focal power" is a collective term for the spherical vertex power, which brings a paraxial pencil of parallel light to a single focus and which is usually considered in the prescription by the "sphere" value or, abbreviated, "sph", and the cylindrical vertex power of a spectacle lens, which brings a paraxial pencil of parallel light to two separate line foci mutually at right angles (section 3.10.2 of ISO 13666:2019(E)) and which is usually considered in the prescription by the "cylinder" value or, abbreviated, "cyl". The "vertex power" is the reciprocal of the paraxial vertex focal length (section 3.10.7 of DIN EN ISO 13666:2019(E)). The focal power may comprise the spherical and astigmatic vertex powers (according to section 3.10.7 of ISO 13666:2019(E)) of a spectacle lens according to section 3.5.2 of ISO 13666:2019(E)).

A refractive power of the spectacle lens may be a focal power governed by refraction of light in the lens material and by a geometrical shape of the spectacle lens, in particular the shape of the front surface and/or the back surface of the spectacle lens. The refractive power may be homogeneous over the entire spectacle lens. In other words, the spectacle lens may not have different zones exhibiting different refractive indices. The properties explained for a spectacle lens may apply to a spectacle lens design data accordingly. The refractive power may be zero, i.e., the spectacle lens may have entirely or in one or more regions a refractive power of zero. This may be in particular the case for a spectacle lens provided for the sole purpose of mitigating myopia and/or slowing down a progress of myopia without compensating any further ametropia of the wearer.

The diffractive add power may be a focal power provided by a diffractive structure applied to the spectacle lens. The term "diffractive add power" indicates that the diffractive power may be added to a possibly existing refractive power, wherein the diffractive power adds to the refractive power and, thus, contributes to the total focal power. The diffractive add power may be positive or negative. However, as the refractive power may be zero for the entire spectacle lens and/or for one or more regions of the spectacle lens, the diffractive add power shall also be considered as a diffractive add power if no refractive power is available. Moreover, the diffractive add power may be zero for one or more regions of the spectacle lens. Yet, the respective regions of the spectacle lens may be referred to as having a diffractive add power which, however, is zero. Thus, the first diffractive add power or the second diffractive add power may be zero. Different regions of the spectacle lens may be provided with different diffractive structures and, hence, with different diffractive add powers.

The diffractive structures applied to the spectacle lens may simultaneously provide different diffractive add powers in the same region of the spectacle lens. This may be achieved by providing a diffractive structure having a respective diffraction efficiency. For instance, the diffraction efficiency of a diffractive structure in a particular region of the spectacle lens may be adapted to diffract light into several different diffraction orders. For instance, the diffraction efficiency of a diffractive structure in a region of the spectacle lens may be adapted to diffract light into multiple positive diffraction orders and/or into multiple negative diffraction orders and/or into one or more positive and one or more negative diffraction orders. Positive diffraction orders may result in an effective focal power being higher than the focal power provided by the refractive power of the spectacle lens and, thus, may result in a shorter effective focal length of the respective region of the spectacle lens than the respective region would have without the diffractive structure. Negative diffraction orders may result in an effective focal power being lower than the focal power provided by the refractive power of the spectacle lens and, thus, may result in a longer effective focal length. Different diffraction orders may result in different focal shifts and, hence, may result in different added focal power to the refractive power of the spectacle lens. Alternatively, the diffractive structure(s) may be adapted to diffract light partly into a positive or negative diffraction and partially into the zeroth diffraction order.

The central region, peripheral region, edge region, first blending region, second blending region, and edge region are referred to as regions of the spectacle lens. These regions may be arranged in a concentrical manner at the spectacle lens. However, alternatively the regions do extend in a non-concentric manner around the central region. The regions may be provided in a circular or non-circular manner. In particular, these regions may differ from each other by having different diffractive structures applied thereto and, hence, by providing different diffractive add powers exhibited by the respective regions. All regions may have the same refractive power, i.e., the refractive power may be homogeneous throughout the entire spectacle lens. The different regions may relate to different angular ranges of vision when the spectacle lens is worn by a wearer. Regions being arranged at a larger radius of the spectacle lens may relate to angular ranges of the vision having larger viewing angles at which they deviate from a central axis extending through the central region.

Some of the regions, in particular the diffractive power region, may comprise multiple zones, which may be arranged in a radially concentric manner. The zones may differ from each other by the radial position and/or extension and/or by the refractive power and/or diffractive add power provided in the respective zone. Moreover, the diffractive power region may comprise multiple zones which may represent Fresnel zones, as described for instance in EP1194797B1. The Fresnel zones may form part of a diffractive structure provided in the diffractive add power region. Each or some of the zones may comprise multiple sub-zones. Each or some of the zones may comprise a main-subzone and a phase-subzone which may be suitable for controlling a relative phase shift of a wave front provided by the different zones, as described for instance in EP1194797B1.

The peripheral region being adjusted to provide a focus in at least one of in front of the retina of the wearer or behind the retina of the wearer means that the peripheral region provides a defocus with respect to the focus of the central region being adjusted for emmetropia. Accordingly, the peripheral region may be adjusted to have a higher and/or lower focal power than the central region. Optionally the peripheral region may be adjusted to offer a bifocal focal power providing a positive and negative defocus as compared to the central region. This may be achieved by providing a respective diffractive add power which may be based on positive and negative diffraction orders.

The method may be a computer-implemented method, which means that some or all of the method steps may be carried out by a computer and/or using a computer.

The virtual representation of the spectacle lens may be any kind of information which enables the manufacturing for a spectacle lens having the specifications as provided by the spectacle lens design data. In particular, the virtual representation of the spectacle lens may include information regarding a geometrical shape of the front surface, a back surface and optionally an edge contour. Moreover, the virtual representation of the spectacle lens may include information regarding one or more materials, of which the spectacle lens may consist or which the spectacle lens may comprise. Moreover, the virtual representation of the spectacle lens may include information regarding various parameters specifying the spectacle lens, such as a refractive index, one or more diffractive structures or patterns applied to the spectacle lens, centration information, such as centration points, vision points, a position and/or appearance of at least one optical mark and/or any other characteristics beneficial for manufacturing the spectacle lens. The virtual representation of the spectacle lens may be regarded as a digital twin of the spectacle lens.

As generally used, the term "emmetropia" relates to a case in which the focal power of the optical components of the eye, i.e. the cornea and the lens, and the focal power of the spectacle lens correcting the refractive errors of the eye are matched to the length of the eye ball, such that a distant point source is focused onto the retina. A deviation of focal power of the spectacle lens of ±0,2 D (which represents a maximum allowed deviation according to DIN EN ISO 8980-1 and 2 for a spectacle lens)or less from a perfect compensation of the refractive errors of the eye may still be considered as providing emmetropia within the context of the disclosure. The emmetropia may be provided for an eye of an (intended) wearer of the spectacle lens having a predetermined refractive error.

The disclosure provides the advantage that spectacle lens design data may be provided offering different focal powers in different regions of the spectacle lens. This allows providing spectacle lenses having different focal powers for different viewing angles of a wearer wearing said spectacle lens. This effect may be used for compensating and/or treating and/or slowing down a progress of myopia. In particular, this may be used for achieving emmetropia for the wearer in a central region of the spectacle lens, i.e., having a full compensation of the wearer's ametropia in the central region of the spectacle lens, while having an effective positive defocus and/or a blur in outer regions, i.e. at larger viewing angles. This allows having light transmitted through the central region being focused onto the wearer's retina, while light transmitted through outer regions being focused at a shorter focal length within the eye before the wearer's retina. This may be beneficial for slowing down a progress of myopia.

Moreover, the disclosure provides the advantage that the different focal powers in different regions may be achieved solely based on different diffractive structures in the different regions and, hence, no variation of the refractive power of the spectacle lens is necessarily required. This may allow providing a spectacle lens design having a homogeneous refractive power over the entire spectacle lens, as the intended differences in the diffractive add power may be achieved by providing the diffractive structures. This may facilitate the manufacturing process of the spectacle lenses and, hence, reduce the manufacturing costs.

In addition, the disclosure provides the advantage that sharp boundaries of the focal power of the spectacle lens may be avoided, as the first blending region may ensure a smooth transition between the central region and the peripheral region, which may significantly differ in the diffractive add power. Due to the first blending region adjusting a diffraction efficiency from the first diffractive add power of the central region to the second focal power of the peripheral region, a rapid change of the focal power at the border between the central region and the peripheral region may be avoided and, hence, a perceived optical quality of the spectacle lens experienced by the wearer may be increased.

Moreover, the disclosure provides the advantage that a focal power may be added for a wide range of peripheral viewing angles by the diffractive add power. This allows a large degree of freedom for designing spectacle lenses with the purpose of mitigating myopia.

The disclosure may provide the further advantage of allowing a high degree of freedom for individualizing a spectacle lens for the intended wearer. The refractive and/or diffractive properties of the spectacle lens may be used for adjusting the spectacle lens design to predetermined properties of the wearer, such as a vertex distance and/or biometric properties like an axial length of the eye, and/or to wearing habits of the wearer.

The spectacle lens may have a uniform refractive power extending at least over the central region, the peripheral region and the first blending region. The spectacle lens may optionally have a uniform refractive power over the entire spectacle lens. Hence, regarding the refractive power, the spectacle lens may be provided as a monofocal lens. Accordingly, the spectacle lens may be manufactured of one material having one refractive index, i.e., without a distribution of different materials having different indices of refraction. This may facilitate the manufacturing of the spectacle lens. Moreover, the curvature of the back surface may be adjusted for a monofocal lens.

The uniform refractive power may be adjusted for emmetropia of the wearer, wherein the central region may have a diffractive add power of zero. Accordingly, the central region may be adjusted to solely use the refractive power of the spectacle lens for correcting the ametropia of the wearer. According to this optional embodiment, no diffractive add power may be provided in the central region. This may allow achieving a reliable correction of the wearer's ametropia in the central region while minimizing possible optical aberrations. Hence, a high imaging quality may be achieved when solely providing a refractive power in the central region which may, hence, result in a good satisfaction of the wearer.

The peripheral region may have a positive diffractive add power provided by one or more positive diffraction orders. In particular, the peripheral region may solely have a positive diffractive add power by one or more positive diffraction orders. This adds a focal shift and, hence, a positive focal power to the refractive power of the spectacle lens. Consequently, this may result in a shorter effective focal length of the peripheral region of the spectacle lens, as compared to the central region not having an diffractive add power. Accordingly, while the central region may be adjusted to focus the light transmitted through the central region being focused onto the wearer's retina in order to achieve emmetropia, the light transmitted through the peripheral region is focused with a shorter focal length before the retina. This results in the viewing angles corresponding to the peripheral region having a positive defocus for the wearer, which may be suitable for slowing down a progress of myopia for the wearer. This configuration may provide the advantage, that a possible longitudinal chromatic aberration of the refractive power of the spectacle lens may be at least partly compensated by the diffractive add power.

The peripheral region optionally may have a positive and negative diffractive add power provided by one or more positive diffraction orders and one or more negative diffraction orders. This may result in the light viewed by the wearer in a viewing angle range being blurred, which may support slowing down a progression of myopia of the wearer and/or curing at least partly the myopia.

The first blending region may be based on a bifocal diffraction efficiency having a non-zero diffraction efficiency in a diffraction order corresponding to the first diffractive add power and a non-zero diffraction efficiency in a diffraction order corresponding to the second diffractive add power. In other words, the first blending region may have a diffraction efficiency including diffraction powers being identical or similar to the first diffraction power of the central region and the second diffraction power of the peripheral region. A "non-zero diffraction efficiency" means that the diffraction efficiency of a particular diffraction order is higher than zero, i.e., that some of the diffracted light is diffracted into the particular diffraction order. If the central region or the peripheral region has a diffractive add power of zero, the corresponding diffraction efficiency of the first blending region may be adjusted to have a non-zero diffraction efficiency in the zeroth diffraction order. If for instance the peripheral region has a positive diffractive add power, the first blending region may have a non-zero diffraction efficiency in at least one positive order matching the positive diffractive add power of the peripheral region. This may allow gradually adjusting the diffraction powers of the spectacle lens between the central region and the peripheral region in a smooth manner and, thus, may enhance the wearer's satisfaction.

The second blending region may be based on a bifocal diffraction efficiency having a non-zero diffraction efficiency in a diffraction order corresponding to the second diffractive add power and a non-zero diffraction efficiency in the zeroth diffractive order. This may be particularly suitable for transferring the diffractive add power of the spectacle lens from the first to the second diffractive add power in a radially outward direction. The first blending region may be adapted to shift the diffraction efficiency from the zeroth diffraction order to one or more positive and/or negative diffraction orders of the peripheral region in the radially outward direction.

The first blending region and/or the second blending region may have a radial lattice structure, such as a radial periodicity of the diffractive structure, corresponding to the periodicity of the diffractive structure provided in the peripheral region or the central region to provide the first or second diffractive power. The periodicity of the diffractive structure(s) may be constant in a radial direction when viewed over the quadratic radius. Different diffractive orders may be used for providing the first diffractive power and the second diffractive power, wherein the second diffractive power differs from the first diffractive power. The diffraction efficiency of the blending region may be bifocal to diffract light partly into a first diffraction order resulting in the first diffraction power and partly into a second diffraction order resulting in the second diffraction power. This may be achieved by providing the diffractive structure in the first and/or second blending region with a radial periodicity corresponding to the radial periodicity of the diffractive structure(s) providing the first or second diffractive power while adapting a modulation depth of the diffractive structure. The modulation depth may correspond to a depth of the diffractive structure with respect to the base curve of the spectacle lens, which may correspond to a depth of a respective engraving into the spectacle lens. In other words, the modulation depth may correspond to an extension of the diffractive structure parallel to the optical axis of the spectacle lens and/or parallel to an optical axis of the eye of the wearer when the spectacle lens is worn by the wearer. Depending on the modulation depth, the ratio of light diffracted into the different diffraction orders provided by the diffractive structures may be adjusted. The modulation depth of the diffractive structure in the blending region may gradually vary in the radial direction. At the interface between the first or second blending region with the peripheral region, the diffractive structure of the first or second blending region, respectively, may have a modulation depth corresponding to the modulation depth of the diffractive structure in the peripheral region. Likewise, at the interface between the central region and the first blending region, the diffractive structure of the first blending region may correspond to the modulation depth of the diffractive structure in the central region. In case no diffractive structure is provided in the central region, the modulation depth of the diffractive structure in the first blending region may be adjusted to be zero at the interface between the first blending region and the central region.

In the following Table 1, some optional examples for modulation depths resulting in different diffraction efficiencies are discussed without the disclosure being limited to these examples. These diffraction orders (DO) of the respective diffraction efficiencies may be used in the central region, peripheral region and/or edge region to provide the respective first and second diffractive power. The modulation depths are indicated in terms of a design wavelength λ used for designing the spectacle lens design data, which may correspond to a wavelength of λ = 546,07 nm, as specified in EN ISO 7944:1998 as reference wavelength corresponding to the green Mercury e-line. However, according to other embodiments, a different wavelength may be used, such as 587,6 nm. The chosen design wavelength may optionally depend on different regulations and conventions applicable for the spectacle lens design data.

**Table 1**

| **Modulation depth of diffractive structure** | **Resulting main diffraction orders** |
|---|---|
| 0 λ | No diffraction and, thus, only 0. DO |
| 0,5 λ | ca. 50% in 0. DO and ca. 50% in 1. DO |
| 1 λ | 1. DO |
| 1,5 λ | ca. 50% in 1. DO and ca. 50% in 2. DO |
| 2 λ | 2. DO |

As can be seen, adjusting the modulation depth allows tuning the diffraction orders mainly contributing to the diffraction efficiency. By providing the diffractive structure(s) in the blending region(s) with a gradually increasing or decreasing modulation depth, an intermediate modulation depth may be achieved which may correspond to an average value of the gradually varying modulation depth. Negative diffraction orders and, hence, negative diffractive add powers, may be achieved by inverting the diffraction profile with respect the base line of the respective surface of the spectacle lens, to which the diffractive structure is applied. A modulation profile of a diffractive structure offering a specific negative diffractive add power may essentially correspond to a mirror image of a modulation profile of a diffractive structure offering a corresponding positive add diffractive power.

According to an optional embodiment, the central region may have no diffractive add power and, hence, no diffractive structure, which may be considered as a diffractive structure having a modulation depth of 0 λ. The peripheral region may have a diffractive power achieved by a diffractive structure diffracting light mainly into the first diffraction order and, hence, may have a modulation depth of about 1 λ. In the edge region, again, no diffractive structure and, thus, a modulation depth of 0 λ may be provided. Accordingly, the first peripheral region may be adjusted to exhibit a modulation depth gradually increasing from 0 λ to 1 λ in a radial direction from the interface with the central region to the interface with the peripheral region, wherein the periodicity of the diffractive structure in the first blending region may correspond to the periodicity of the peripheral region. Likewise, the second peripheral region may be adjusted to exhibit a modulation depth gradually decreasing from 1 λ to 0 λ in a radial direction from the interface with the peripheral region to the interface with the edge region, wherein the periodicity of the diffractive structure in the first blending region may correspond to the periodicity of the peripheral region. This may result in the first and second peripheral region having a non-zero diffraction efficiency in the 0. DO as well as in the 1. DO and, hence, exhibiting a bifocal character transferring the first diffraction power to the second diffraction power and vice versa, respectively. Using low diffraction orders, such as a the 1. OD and the 0. DO may provide the advantage that possible optical aberrations, such as longitudinal chromatic aberrations (LCAs), may be less pronounced than when using higher diffraction orders. Consequently, using low diffraction orders may enhance the optical quality of the spectacle lens.

The spectacle lens may further comprise an edge region arranged radially outside of the peripheral region and a second blending region arranged between the peripheral region and the edge region. The edge region may have a diffractive add power of zero and the second blending region may be adapted to adjust a diffraction efficiency from the second diffractive add power to a diffractive add power of zero in a radially outward direction. In particular, the edge region may be adapted not to exhibit a diffractive structure. This may reduce the manufacturing effort, as no diffractive structure needs to be applied in the edge region of the spectacle lens. Moreover, diffractive patterns of diffractive structures are often required to be smaller with increasing radius of the spectacle lens. Hence, this feature may allow avoiding a need for providing filigree diffraction structures at the spectacle lens, which may thus significantly facilitate the manufacturing process for the spectacle lens. The second blending region may, thus, provide a smooth transition between the peripheral region having a diffractive add power provided by a diffractive structure to the edge region not having a diffractive structure and hence effectively a diffractive add power of zero. The second blending region may be adapted to shift the diffraction efficiency from the one or more positive and/or negative diffraction orders of the peripheral region to the zeroth diffraction order in a radially outward direction. A spectacle lens design comprising a first and a second blending region adjacent to the peripheral region may, thus, exhibit a double-apodised sinusoidal diffraction profile extending over the first blending region, the peripheral region and the second peripheral region.

According to an option, the uniform refractive power may be adjusted to provide a focus in front of the retina of the wearer, i.e. before the retina of the eye of the wearer, wherein the central region may have a negative diffractive add power such that a combination of the uniform refractive power and the negative diffractive add power in the central region is adjusted for emmetropia of the wearer. In other words, in the central region the combination of the uniform refractive power and the diffractive add power may result in achieving emmetropia for the wearer. In particular in this case, the peripheral region may have a diffractive add power of zero. This combination provides the advantage that the diffractive structures for providing a diffractive add power may be limited to the central region and the first peripheral region. Accordingly, there may be no need to provide diffractive structures in the radially outer regions of the spectacle lens, such as in the peripheral region and/or in an edge region. In particular, there may be no need to provide filigree diffractive structures in the radially outer regions of the spectacle lens.

The first blending region, the peripheral region and, if available, the edge region and the second blending region may correspond to different viewing angles of a wearer wearing a spectacle lens manufactured according to a spectacle lens design according to any one of the preceding claims. In particular, the different regions may be arranged in a concentric manner at the spectacle lens. The center point, around which the different concentrically extend, may coincide with a visual point of the spectacle lens.

Diffractive structures may be applied to one or more surfaces of the spectacle lens, such as the front surface and/or the back surface. Alternatively or additionally, the diffractive structures may be applied within the spectacle lens, i.e. within the bulk material of the spectacle lens. The diffractive structures may be provided by engravings and/or by local variations of the refractive index of the spectacle lens material. Optionally, the diffractive structure(s) may be embedded in an at least dual index structure and/or in a layer structure, which may facilitate providing smooth and cleanable surfaces. Alternatively or additionally, the diffractive structures may be applied by ion beam etching and/or electron etching and/or molding and/or thermal reshaping and/or lathe cutting.

The diffractive structures may be provided with a sinusoidal profile and may have a constant periodicity when viewed in dependence on the quadratic radius. Alternatively, the diffractive structures may deviate from a sinusoidal profile by having one or more different blazing angles and/or one or more different inclinations of the flaks of the oscillating profile The diffractive structures may extend in a concentric manner around an optical axis of the spectacle lens or. Optionally at least some of the diffractive structures may extend in an eccentric manner with respect to the optical axis of the spectacle lens.

Optionally the diffraction efficiency of diffractive structures may vary with an azimuthal position at the spectacle lens, i.e., the diffractive add power provided by the diffractive structures may not result in a rotationally symmetric defocus and/or blur. Optionally a rotationally symmetric or asymmetric defocus and/or blur may be provided for mitigating and/or treating myopia. Optionally a diffraction efficiency may be adjusted and/or customized regarding its azimuthal and/or radial configuration to the wearer's eye biometry. Hence, the azimuthal and/or radial configuration of the diffraction structures and/or the diffraction efficiency may depend on at least one of the following parameters: an eye length, a retinal curvature, a keratometric power or Rx.

The different regions of the spectacle lens may optionally correspond to the following viewing angle ranges, wherein the viewing angles are specified as half-angles between the sheath surface of a viewing angle cone and the optical axis of the spectacle lens. The different regions may optionally overlap each other. Table 2 exemplarily indicates angular ranges for the different regions of spectacle lenses according to two different optional embodiments:

**Table 2**

| **Region** | **Viewing angle range according to optional embodiment 1** | **Viewing angle range according to optional embodiment 2** |
|---|---|---|
| Central region | 0° - 15° | 0° - 15° |
| First blending region | 10° - 25° | 15° - 20° |
| Peripheral region | 15° - 50° | 20° - 50° |
| Second blending region | 35° - 60° | 50° - 60° |

Additionally or alternatively, a data processing device comprising a processor configured to perform the above described method at least partly may be provided.

In other words, a data processing system comprising a processor and a storage medium coupled to the processor may be provided, wherein the processor is adapted to perform the above described method at least partly based on a computer program stored on the storage medium.

The data processing device or system may be a digital electronic machine that can be programmed to carry out sequences of arithmetic or logical operations (computation) automatically. These logical operations may be defined by the above-described method at least partly.

The data processing device may be a computer. The term computer may refer to general-purpose devices like personal computers (PC) and mobile devices like smartphones and tablets. However, the term computer is not limited to a single device. Instead, the term computer should be interpreted in a broad manner including all data processing devices configured to or being suitable to carry out the above described method, alone or in combination with other (data processing) devices, at least partly. Therefore, the term computer may also refer to a group of computers that are linked and function together, such as a computer network or computer cluster.

The data processing device may comprise at least one processor or processing element, e.g., a central processing unit (CPU) (optionally in the form of a microprocessor). The data processing device may comprise a computer memory, optionally a semiconductor memory chips. The processor may be configured to carry out a computer program. The computer program may be stored on the computer memory. The data processing device may include may be configured to be connect to one or more peripheral devices, e.g., including at least one of an input device (e.g., a keyboard, a mouse, a joystick, etc.), an output device (a monitor screen, a printer, etc.), and input/output devices that perform both functions (e.g., a touchscreen). The peripheral device may allow information to be retrieved from an external source, such as an operator of the computer, and they enable the result of operations to be saved and retrieved.

The above given description with respect to the method applies mutatis mutandis to the data processing device and vice versa.

Additionally or alternatively, a computer program comprising instructions which, when the program is executed by a computer, cause the computer to carry out the above described method at least partly may be provided.

A computer program may be defined - inter alia - as a sequence or set of instructions in a programming language for a computer to execute. The computer program may be considered a software component.

The computer program may be provided - inter alia - as an executable file and may be provided in the form of source code, i.e., its human-readable form. Source code may need an additional computer program to be executable by a computer because computers regularly can only execute their native machine instructions. Thus, also this additional computer program may be provided or may be part of the computer program. However, the computer program may also be provided without such an additional computer program.

The above given description with respect to the method and the data processing device applies mutatis mutandis to the computer program and vice versa.

Additionally or alternatively, a computer-readable storage medium having stored the above described computer program at least partly thereon may be provided.

That is, the computer-readable storage medium may comprise instructions which, when the instructions are executed by a computer, cause the computer to at least partially execute the method described above.

The computer-readable storage medium may be any digital data storage device, such as a USB flash drive, a hard drive, a CD-ROM, an SD card, or an SSD card.

The above given description with respect to the method, the data processing device and the computer program applies mutatis mutandis to the computer-readable storage medium and vice versa.

Additionally or alternatively, a data signal carrying the above described computer program at least partly thereon may be provided.

That is, the computer program does not necessarily have to be stored on a computer-readable storage medium in order to be made available to the computer, but can also be obtained externally via the data signal, e.g., using the Internet or otherwise.

It is understood by a person skilled in the art that the above-described features and the features in the following description and figures are not only disclosed in the explicitly disclosed embodiments and combinations, but that also other technically feasible combinations as well as the isolated features are comprised by the disclosure. In the following, several optional embodiments and specific examples are described with reference to the figures for illustrating the disclosure without limiting the disclosure to the described embodiments.

Further optional embodiments will be illustrated in the following with reference to the drawings. The figures show:
- Figure 1: a schematic illustration of a spectacle lens design according to a first optional embodiment;
- Figure 2A: a further optional embodiment of a spectacle lens design;
- Figure 2B: a graph of the differential sagittal height of the diffraction structures applied to the spectacle lens over the radial position on the spectacle lens;
- Figure 2C: the modulus of the optical transfer function of the spectacle lens design of Figure 2A over the spatial frequency;
- Figure 2D: the modulus of the optical transfer function;
- Figure 3: a spectacle lens design according to a further optional embodiment;
- Figure 4A: a further optional embodiment of a spectacle lens design;
- Figure 4B: a graph of the differential sagittal height of the diffraction structures applied to the spectacle lens over the radial position on the spectacle lens;
- Figure 4C: the modulus of the optical transfer function of the spectacle lens design of Figure 4A over the spatial frequency;
- Figure 4D: the modulus of the optical transfer function;
- Figure 5A: a further optional embodiment of a spectacle lens design according to the disclosure;
- Figure 5B: a graph of the differential sagittal height of the diffraction structures applied to the spectacle lens over the radial position on the spectacle lens;
- Figure 5C: the modulus of the optical transfer function;
- Figure 5D: the modulus of the optical transfer function;
- Figure 6: a method for manufacturing a spectacle lens.

In the drawings the same reference signs are used for corresponding or similar features in different drawings.

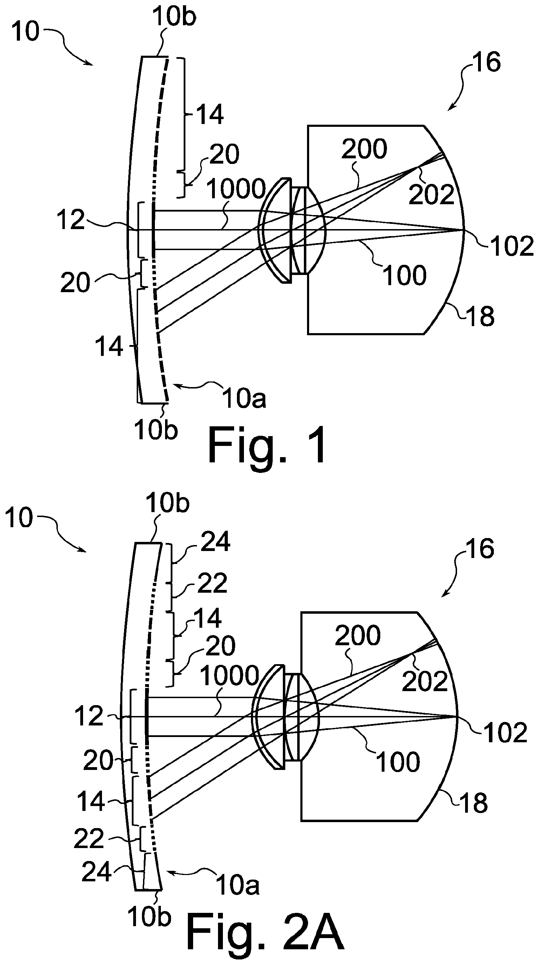

Figure 1 schematically illustrates a spectacle lens 10 according to a first optional embodiment, wherein the spectacle lens 10 is provided according to spectacle lens design data according to an optional embodiment of the disclosure. The spectacle lens 10 is illustrated in combination with a schematically illustrated eye 16 of a wearer wearing said spectacle lens 10. Schematically shown light rays 100 and 200 indicate beam paths at different viewing angles.

The spectacle lens design data is provided for the purpose of a use of the spectacle lens design data for a manufacture of a spectacle lens 10 related to a wearer. The spectacle lens design data is adjusted such that the spectacle lens 10 has a refractive power and at least partly a diffractive add power. Moreover, the spectacle lens 10 is adjusted to provide a central region 12 having a first diffractive add power (which may be zero) and being adjusted for emmetropia of the wearer by providing a focus 102 at the wearer's retina 18. In addition, the spectacle lens 10 provides a peripheral region 14 arranged radially outside of the central region 12, wherein the peripheral region 14 has a second diffractive add power and is adjusted to provide a focus 202 before the retina 18 of the wearer and/or behind the retina 18 of the eye 16 of the wearer.

In addition, the spectacle lens 10 further comprises a first blending region 20 arranged between the central region 12 and the peripheral region 14, wherein the first blending region 20 is adapted to adjust a diffraction efficiency from the first diffractive add power to the second diffractive add power in a radially outward direction.

The spectacle lens 10 has a uniform refractive power extending at least over the central region 12, the peripheral region 14 and the first blending region 20. The refractive power may be determined by the shape of the back surface 10a of the spectacle lens 10 and the refractive index of the spectacle lens material. According to the presented optional embodiment the uniform refractive power is adjusted for emmetropia of the wearer. The central region 12 has a diffractive add power of zero. This may be achieved by not providing any diffractive structure in the central region or by providing a diffractive structure having a diffraction efficiency with a non-zero diffractive add power only in the zeroth order. Accordingly, the light rays 100 propagating through the central region 12 and reaching the eye 16 at a viewing angle of 0°, i.e., parallel to the optical axis 1000 of the spectacle lens, are focused to a focus 102 at the retina 18.

The peripheral region 14 has a positive diffractive add power provided by a diffractive structure having a non-zero diffraction efficiency in one or more positive diffraction orders. The total or effective focal power of the spectacle lens 10 in the peripheral region 14, thus, originates in a combination of the refractive power and the diffractive add power by the diffractive structure provided in the peripheral region 14. Due to the higher focal power in the peripheral region 14 the focus of the light rays transmitted through the peripheral region 14, which the wearer views at a non-zero viewing angle, are focused at a shorter focal length resulting in the focus 202 being before the retina 18 within the eye 16. Consequently, these light rays 200 will be viewed by the wearer in a defocused manner. This may be beneficial for slowing down a progression of myopia and/or for treating myopia of the wearer while still having emmetropia for the light rays 100 parallel to the optical axis 1000 and at small viewing angles.

Figure 2A depicts a further optional embodiment of a spectacle lens design being similar to the spectacle lens design illustrated in Figure 1. While many properties of this optional embodiment correspond to the properties of the embodiment shown in Figure 1, it differs from the embodiment of Figure 1 in its peripheral region 14 not extending to the edge 10b of the spectacle lens 10 but being limited to a predetermined radial portion of the spectacle lens 10. Moreover, the spectacle lens 10 further comprises an edge region 24 arranged radially outside of the peripheral region 14 and a second blending region 22 arranged between the peripheral region 14 and the edge region 24. The edge region 24 has a diffractive add power of zero and the second blending region 22 is adapted to adjust a diffraction efficiency from the second diffractive add power to a diffractive add power of zero in a radially outward direction. The diffractive add power of the peripheral region 14 may be the same or similar to the diffractive add power of the peripheral region 14 of the embodiment of Figure 1. Accordingly, the light rays 200 transmitted through the peripheral region 14 at a viewing angle entering the eye 16 of the wearer are focused to a focus 202 before the retina 18, while again the central region 12 is adjusted for emmetropia of the wearer to achieve a focus 102 at the retina 102. However, according to the embodiment presented in Figure 2A, the angular range of viewing angles covered by the peripheral region 14 is reduced as compared to the embodiment of Figure 1.

By providing the second blending region 22, a smooth transition from the diffractive add power of the peripheral region 14 to a zero diffractive add power of the edge region 24 may be achieved. Consequently, it is not required to provide diffractive structures in the edge region 24. This facilitates the manufacturing of the spectacle lens, as typically diffractive structures at the radially outer regions, such as the edge region 24, would require filigree diffractive structures requiring a high manufacturing effort. Hence, limiting the peripheral region 14 to a predetermined angular range, such as an angular range of 10°, and providing a second blending region 22 and an edge region 24 in a radially outside direction may allow reducing the manufacturing effort and, thus, the manufacturing costs.

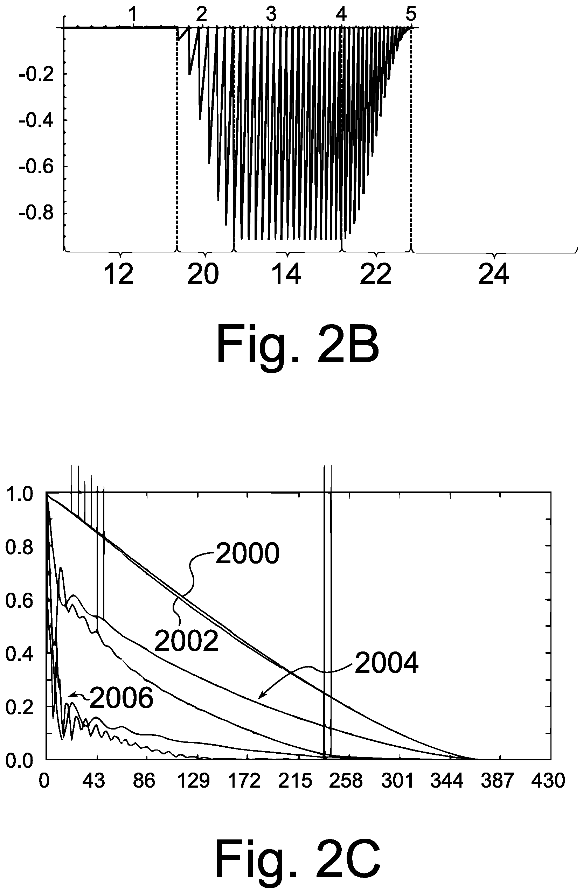

Figure 2B schematically shows a graph of the differential sagittal height (on the vertical axis, in µm) of the diffraction structures applied to the spectacle lens 10 over the radial position on the spectacle lens 10 (horizontal axis, in mm). The differential sagittal height may correspond to the modulation depth of the diffraction structures. The differential sagittal height corresponds to the height profile of the diffractive structures with respect to a base curve of the spectacle lens 10, which may correspond to the regular front surface or back surface 10a of the spectacle lens 10 having no diffractive structure applied thereto. The brackets underneath the graph indicate the central region 12, the first blending region 20, the peripheral region 14, the second blending region 22 and the edge region 24. As can be seen, no diffractive structures are applied to the spectacle lens 10 in the central region 12 and in the edge region 24. The peripheral region 14 exhibits a diffractive structure, which has a homogeneous depth with respect to the base curve, which corresponds to the zero line of the graph. The blending regions offer an increasing and decreasing depth of the diffractive structures, respectively, which provides a smooth transition from the zero diffractive add power in the central region 12 and the edge region 24, respectively, and the peripheral region 14 having a non-zero diffractive add power. Due to the increasing and decreasing height profile of the diffractive structures in the blending regions 20 and 22, a changing diffraction efficiency may be achieved varying with the radial position. The period lengths of the diffractive structure(s) may be constant when viewed over the squared radial position. The diffraction structure of a spectacle lens design data may be provided by computation, which may for instance use a ZEMAX model and UDS for importing and analyzing exact parametric prescription of the diffractive profile.

Figure 2C exemplarily shows the modulus of the optical transfer function (OTF) of the spectacle lens design of Figure 2A in arbitrary units over the spatial frequency in cycles per mm compared to the diffraction limit 2000. The OTF of the light rays propagating through the central region 14 at a viewing angle of 0° not having a diffractive structure closely resembles the OTF 2000 indicating the diffraction limit. This demonstrates a good optical quality and imaging to the retina 18 for light rays viewed at a viewing angle of 0°. The graphs 2004 and 2006 indicate the OTF for light rays viewed at a viewing angle of 5° (graph 2004) propagating through the first blending region 20 and at 10° (graph 2006) propagating through the peripheral region 14, respectively. These viewing angles correspond to light rays propagating through regions in which diffractive structures are applied to the spectacle lens 10 providing a positive defocus. Accordingly, the OTF for these viewing angles are significantly lower than the OTF 2000 indicating the diffraction limit. Therefore, the light rays viewed at a viewing angle of 10° appear in a strongly defocused manner and the light rays viewed at a viewing angle of 5° appear in an intermediately defocused manner.

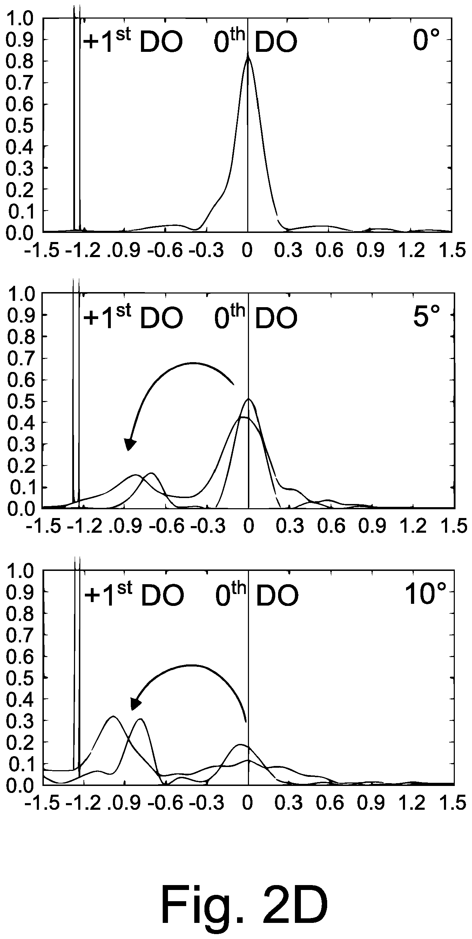

Figure 2D shows the modulus of the optical transfer function (OTF) (vertical axis, in arbitrary units) over the focus shift in mm of the spectacle lens depicted in Figure 2A for the light rays viewed at a viewing angle of 0° transmitted through the central region 12 in the upper panel, for a viewing angle of 5° transmitted through the first blending region 20 in the middle panel, and for a viewing angle of 10° transmitted through the peripheral region 14 in the lower panel. As can be seen, the OTF for the light rays at 0° exhibit essentially a single peak in the zeroth diffraction order (0^{th} DO) while having essentially no diffraction efficiency at the first positive and negative diffraction orders (+1^{st} DO, -1^{st} DO). This results in the focal power of the central region essentially corresponding to its refractive power without any further diffractive add power. In contrast, at a viewing angle of 5° associated with the first blending region 20 the diffraction efficiency is split such that the OTF exhibits a peak at the 0^{th} DO and also at the +1^{st} DO for transferring the diffraction efficiency from the 0^{th} DO to the 1^{st} DO, wherein the 0^{th} DO is more prominent than the +1^{st} DO. At a viewing angle of 10° associated with the peripheral region 14, the OTF offers the most prominent peak at the +1^{st} DO while the peak at the 0^{th} DO is less prominent. This results in a reliable diffractive add power added to the refractive power and causing the intended focusing of the light rays before the retina 18. Thus, the first blending region 20 may be based on a bifocal diffraction efficiency having a non-zero diffraction efficiency in the first diffractive add power and a non-zero diffraction efficiency in the second diffractive add power.

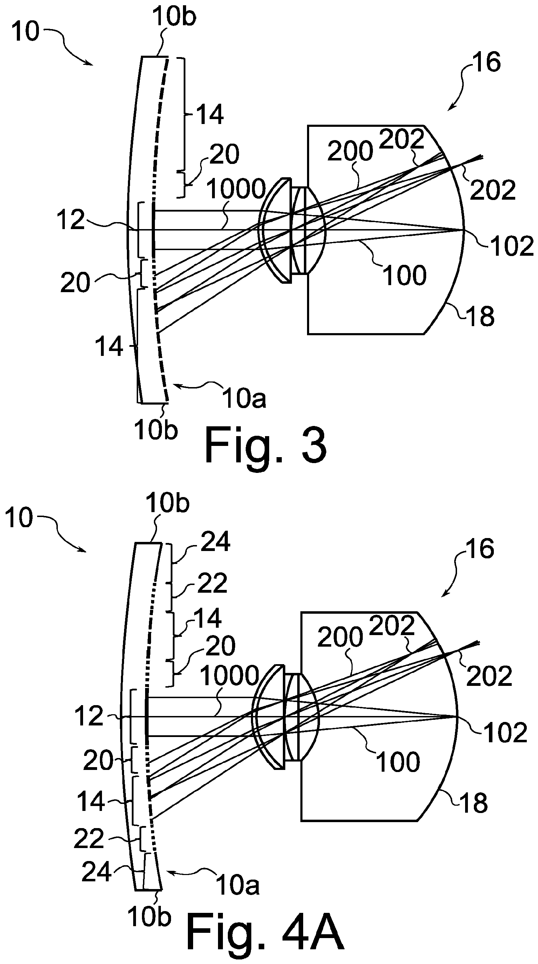

Figure 3 exemplarily shows a spectacle lens design according to an optional embodiment being similar to the spectacle lens design presented and described with reference to Figure 1. However, the spectacle lens design shown in Figure 3 differs from the embodiment of Figure 1 in the peripheral region being adjusted to provide a positive and a negative diffractive add power in order to provide a positive and a negative defocus with respect to the retina 18. The peripheral region 14 according to this embodiment has a positive and negative diffractive add power provided by one or more positive diffraction orders and one or more negative diffraction orders. The first blending region 20 may be based on a bifocal diffraction efficiency having a non-zero diffraction efficiency in the first diffractive add power and a non-zero diffraction efficiency in the second diffractive add power. This configuration may cause a blurred view of the light rays transmitted through the peripheral region 14 and viewed at a viewing angle of about 10°. According to this embodiment, the peripheral region 14 extends until the edge 10b of the spectacle lens 10.

Figure 4A presents a further optional embodiment essentially corresponding to a combination of the optional embodiments of Figures 2A and 3. Accordingly, the peripheral region 14 is adapted to offer a positive and a negative diffraction power and does not extend until the edge 10b of the spectacle lens 10 but is restricted to a predetermined radial range and being adjoined by a second blending region 22 surrounding the peripheral region 14 in a radially outside direction. This embodiment may offer a blurred view of the light rays viewed at an angle of about 10° and the manufacturing effort may be facilitated by refraining from diffractive structures in the peripheral region 24 radially outside of the second blending region. The viewing angle ranges corresponding to the different regions of the spectacle lens may optionally be chosen according to one of the embodiments presented in Table 2 above.

The second blending region may be based on a bifocal diffraction efficiency having a non-zero diffraction efficiency in the second diffractive add power and a non-zero diffraction efficiency in the zeroth diffractive order. The peripheral region may have a diffractive add power of zero and may not be provided with any diffractive structure.

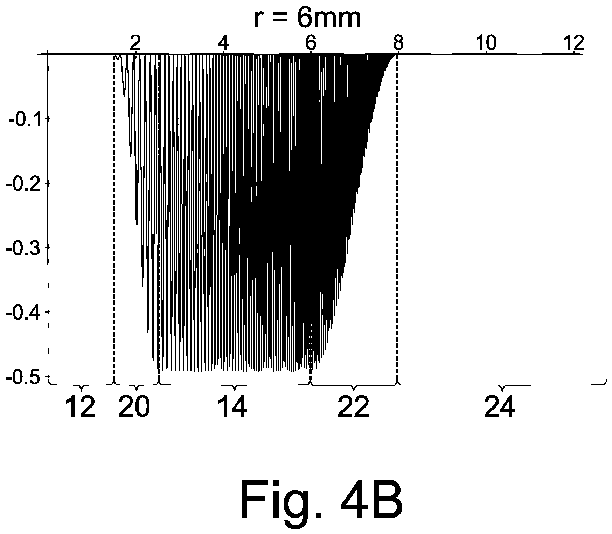

Figure 4B schematically shows a graph of the differential sagittal height (on the vertical axis, in µm) of the diffraction structures applied to the spectacle lens over the radial position on the spectacle lens (horizontal axis, in mm) for the spectacle lens design according to the embodiment presented in Figure 4A. The differential sagittal height corresponds to the height profile and, hence, the modulation depth of the diffractive structures with respect to a base curve of the spectacle lens 10, which may correspond to the regular front surface or back surface 10a of the spectacle lens 10 having no diffractive structure applied thereto. The brackets underneath the graph indicate the central region 12, the first blending region 20, the peripheral region 14, the second blending region 22 and the edge region 24. As can be seen, no diffractive structures are applied to the spectacle lens 10 in the central region 12 and in the edge region 24. The period length may be constant when viewed over the squared radial position. The diffractive structures in the blending regions 20, 22 may exhibit a different blazing angle than the diffractive structure of the peripheral region 24. The border line between the peripheral region 14 and the second blending region 22, which is marked with a dashed line, is located at a radius of 6 mm from the center of the spectacle lens 10. The presented diffractive profile may provide an added diffractive add power of +2 D by the positive diffraction order.

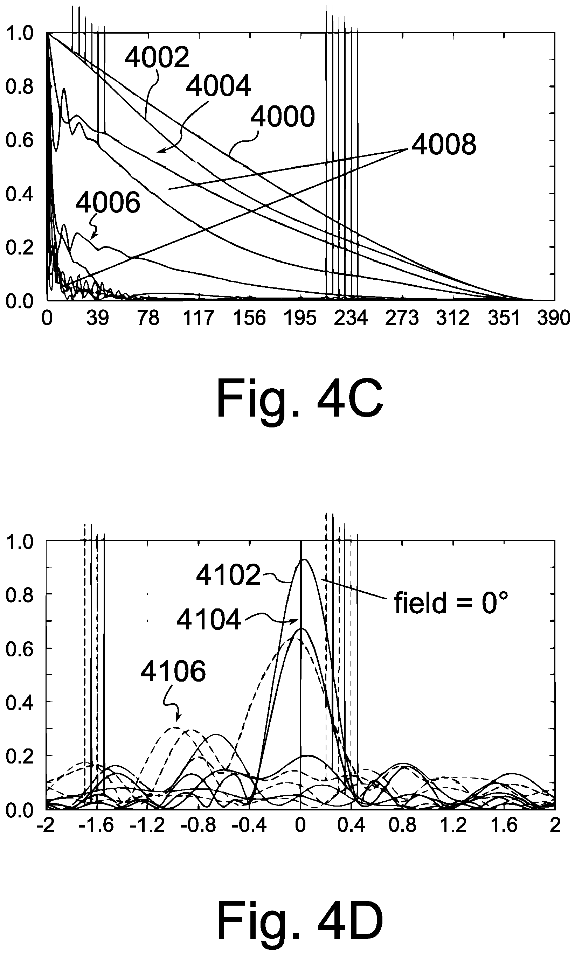

Figure 4C exemplarily shows the modulus of the optical transfer function (OTF) of the spectacle lens design of Figure 4A in arbitrary units over the spatial frequency in cycles per mm compared to the diffraction limit 4000. The OTF of the light rays propagating through the central region 14 at a viewing angle of 0° not having a diffractive structure, indicated as graph 4002, closely resembles the OTF 4000 indicating the diffraction limit. This indicates a good optical quality and imaging to the retina 18 for light rays viewed at a viewing angle of 0°. The graphs 4004 and 2006 indicate the OTF for light rays viewed at a viewing angle of 5° (graph 4004) propagating through the first blending region 20 and at from 10° to 20° (graphs 4006) propagating through the peripheral region 14, respectively. These viewing angles correspond to light rays propagating through regions in which diffractive structures are applied to the spectacle lens 10 providing a positive defocus. Accordingly, the OTF for these viewing angles are significantly lower than the OTF 4000 indicating the diffraction limit. Therefore, the light rays viewed at a viewing angles from 5° to about 20° (see lines 4008) appear in a strongly positively and negatively defocused manner and the light rays viewed at a viewing angle of 5° appear in a blurred manner.

Figure 4D shows the modulus of the optical transfer function (OTF) (vertical axis, in arbitrary units) over the focus shift in mm of the spectacle lens depicted in Figure 4A for the light rays viewed at a viewing angle of 0° transmitted through the central region 12 (graph 4102), for a viewing angle of 5° transmitted through the first blending region 20 (graph 4104), and for a viewing angles of 10° and larger transmitted through the peripheral region 14, and the second blending region 22 (graphs indicated by arrow 4106). As can be seen, the OTF for the light rays at 0° exhibit essentially a single peak in the zeroth diffraction order (0^{th} DO) while having essentially no diffraction efficiency at the first positive and negative diffraction orders (+1^{st} DO, -1^{st} DO). This results in the focal power of the central region essentially corresponding to its refractive power without any further diffractive add power. In contrast, at a viewing angle of 5° associated with the first blending region 20 the diffraction efficiency is split such that the OTF exhibits a peak at the 0^{th} DO and also at the +1^{st} DO and -1^{st} DO for transferring the diffraction efficiency from the 0^{th} DO to the +1^{st} DO and -1^{st} DO, wherein the 0^{th} DO is more prominent than the +1^{st} DO and -1^{st} DO. For larger viewing angles, the OTF offers non-zero diffraction efficiencies at positive and negative diffraction orders in order to provide the associated focal shifts resulting in the intended blur for these viewing angles.

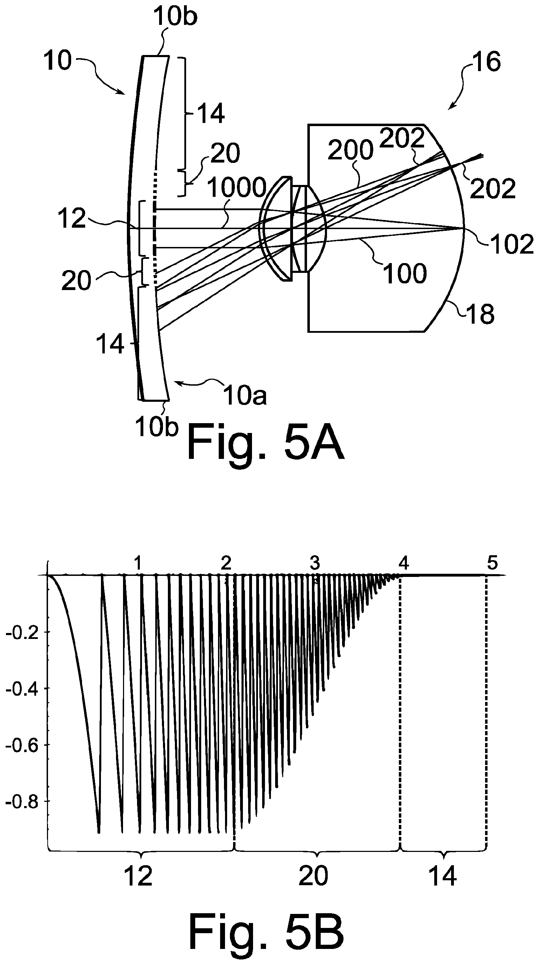

Figure 5A depicts a further optional embodiment of a spectacle lens design according to the disclosure. According to this embodiment the uniform refractive power provides a focus in front of the retina 18 of the wearer, i.e., within the eye 16 before the retina 18. The central region 12 has a negative diffractive add power such that a combination of the uniform refractive power and the negative diffractive add power in the central region 12 is adjusted for emmetropia of the eye 16 wearer. The peripheral region 14 does not exhibit any diffractive add power and consequently is adapted to provide a defocus focusing the light rays 200 transmitted through the peripheral region 14 at viewing angles reaching the eye 16 before the retina 18 due to the refractive power of the spectacle lens. Accordingly, the peripheral region 14 has a diffractive add power of zero. A first blending region 20 arranged between the central region 12 and the peripheral region 14 is adapted to adjust a diffraction efficiency from the first diffractive add power of the central region 12 to zero diffractive add power of the peripheral region 14 in a radially outward direction.

Figure 5B schematically shows a graph of the differential sagittal height (on the vertical axis, in µm) of the diffraction structures applied to the spectacle lens over the radial position on the spectacle lens 10 (horizontal axis, in mm) for the spectacle lens design according to the embodiment presented in Figure 5A. The differential sagittal height corresponds to the height profile and, hence, the modulation depth of the diffractive structures with respect to a base curve of the spectacle lens 10, which may correspond to the regular front surface or back surface 10a of the spectacle lens 10 having no diffractive structure applied thereto. The brackets underneath the graph indicate the central region 12, the first blending region 20, and the peripheral region 14. As can be seen, no diffractive structures are applied to the spectacle lens 10 in the peripheral region 14. The first blending region 20 is adapted to fade the diffractive add power in a radially outward direction.

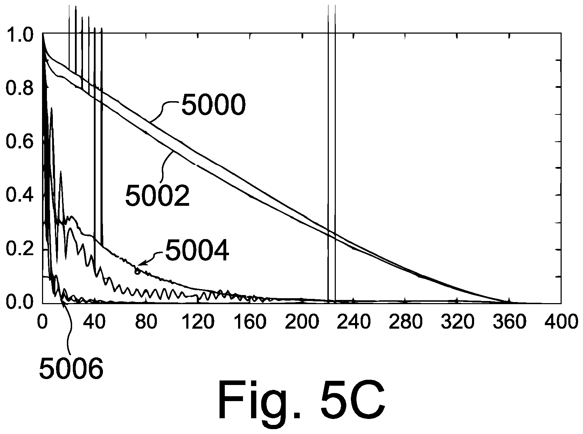

Figure 5C exemplarily shows the modulus of the optical transfer function (OTF) of the spectacle lens design of Figure 5A in arbitrary units over the spatial frequency in cycles per mm compared to the diffraction limit 5000. The OTF of the light rays propagating through the central region 14 at a viewing angle of 0°, shown as graph 5002, having a diffractive structure is close to the OTF 5000 indicating the diffraction limit. However, a deviation from the diffraction limit 5000 may be more pronounced as compared to the above-presented embodiments not having a diffractive structure applied to the central region 12. The graphs 5004 and 5006 indicate the OTF for light rays viewed at a viewing angle of 10° (graph 5004) propagating through the first blending region 20 and at 20° (graph 5006) propagating through the peripheral region 14 at a viewing angle of 20°, respectively. Accordingly, the OTF for these viewing angles are significantly lower than the OTF 5000 indicating the diffraction limit. Therefore, the light rays viewed at a viewing angle of 20° appear in a strongly defocused manner and the light rays viewed at a viewing angle of 10° appear in an intermediately defocused manner.

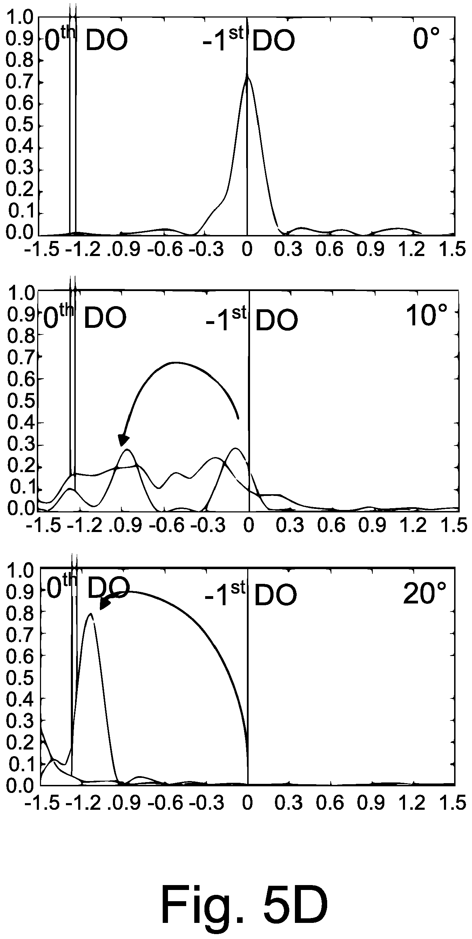

Figure 5D shows the modulus of the optical transfer function (OTF) (vertical axis, in arbitrary units) over the focus shift in mm of the spectacle lens depicted in Figure 5A for the light rays viewed at a viewing angle of 0° transmitted through the central region 12 in the upper panel, for a viewing angle of 10° transmitted through the first blending region 20 in the middle panel, and for a viewing angle of 20° transmitted through the peripheral region 14 in the lower panel. As can be seen, the OTF for the light rays at 0° exhibit essentially a single peak in the -1^{st} diffraction order (-1^{st} DO) while having essentially no diffraction efficiency at the first positive and negative diffraction orders -2^{nd} DO, 0^{th} DO). This results in the focal power of the central region essentially corresponding to its refractive power combined with the provided diffractive add power on the central region 12. In contrast, at a viewing angle of 10° associated with the first blending region 20 the diffraction efficiency is split such that the OTF exhibits essentially equal peaks at the 0^{th} DO and also at the -1^{st} DO for transferring the diffraction efficiency from the -1^{st} DO to the 0^{th} DO. At a viewing angle of 20° associated with the peripheral region 14 according to this optional embodiment, the OTF offers a peak only at the 0^{th} DO. This results in a reliable diffractive add power added to the refractive power in the central region 12 for achieving emmetropia while causing the intended focusing of the light rays before the retina 18 for larger viewing angles by the peripheral region. The first blending region 20 may be based on a bifocal diffraction efficiency having a non-zero diffraction efficiency in the first diffractive add power (-1^{st} DO) and a non-zero diffraction efficiency in the second diffractive add power (0^{th} DO). The transfer from the -1^{st} DO to the 0^{th} DO results in a focus shift resulting a compensation of the added refractive power in the central region and refraining from said compensation of the added refractive power in the peripheral region 14.

In the above-presented embodiments, the first blending region, the peripheral region and, if available, the edge region and the second blending region correspond to different viewing angles of a wearer wearing a spectacle lens 10 manufactured according to a spectacle lens design according to any one of the preceding claims. The associated view angle range for each region may vary between the individual embodiments.

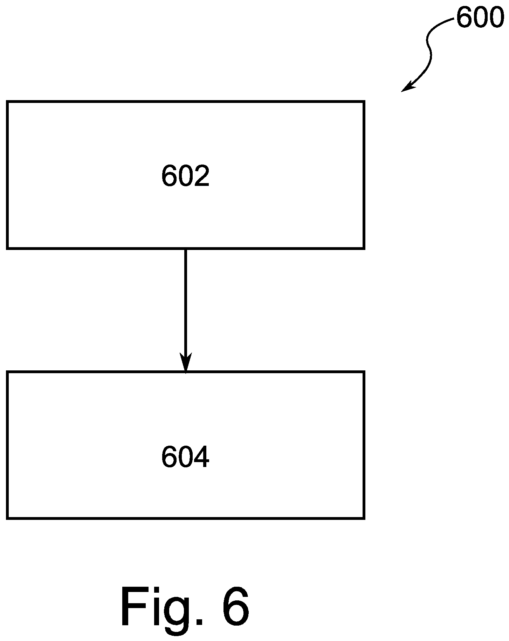

Figure 6 schematically illustrates a method 600 for manufacturing a spectacle lens 10. The method 600 comprises a step 602 of providing a spectacle lens design data according to an embodiment of the disclosure and a step 604 of manufacturing the spectacle lens 10 according to the provided spectacle lens design data.

### List of reference signs

- 10: spectacle lens
- 10a: back surface of spectacle lens
- 10b: edge of spectacle lens
- 12: central region
- 14: peripheral region
- 16: eye
- 18: retina
- 20: first blending region
- 22: second blending region
- 24: edge region
- 100: light ray propagating through central region at zero viewing angle
- 102: focus of light ray 100
- 200: light ray propagating through peripheral region at non-zero viewing angle
- 202: focus of light ray 200
- 600: method for manufacturing a spectacle lens
- 602 - 604: method steps

- 1000: optical axis of spectacle lens

- 2000 - 2006: graphs of optical transfer function
- 4000 - 4006: graphs of optical transfer function
- 4102 - 4106: modulus of OTF over focus shift
- 5000 - 5006: graphs of optical transfer function

## Claims

1. Spectacle lens (10) related to a wearer, the spectacle lens having a refractive power and at least partly a diffractive add power and providing:
- a central region (12) having a first diffractive add power and being adjusted for emmetropia of the wearer; and
- a peripheral region (14) arranged radially outside of the central region (12), wherein the peripheral region (14) has a second diffractive add power and is adjusted to provide a focus (202) in at least one of in front of the retina (18) of the wearer or behind the retina (18) of the wearer;
**characterized in that** the spectacle lens design data is adjusted such that the spectacle lens (10) further exhibits:
- a first blending region (20) arranged between the central region (12) and the peripheral region (14), wherein the first blending region (20) is adapted to adjust a diffraction efficiency from the first diffractive add power to the second diffractive add power in a radially outward direction.

2. Spectacle lens design data according to claim 1, wherein the spectacle lens (10) has a uniform refractive power extending at least over the central region (12), the peripheral region (14) and the first blending region (20).

3. Spectacle lens design data according to claim 2, wherein the uniform refractive power is adjusted for emmetropia of the wearer and wherein the central region (12) has a diffractive add power of zero.

4. Spectacle lens design data according to any one of the preceding claims, wherein the peripheral region (14) has a positive diffractive add power provided by one or more positive diffraction orders.

5. Spectacle lens design data according to any one of claims 1 or 3, wherein the peripheral region (14) has a positive and negative diffractive add power provided by one or more positive diffraction orders and one or more negative diffraction orders.

6. Spectacle lens design data according to any one of the preceding claims, wherein the first blending region (20) is based on a bifocal diffraction efficiency having a non-zero diffraction efficiency in the first diffractive add power and a non-zero diffraction efficiency in the second diffractive add power.

7. Spectacle lens design data according to any one of the preceding claims, further comprising an edge region (24) arranged radially outside of the peripheral region (14) and a second blending region (22) arranged between the peripheral region (14) and the edge region (24), wherein the edge region (24) has a diffractive add power of zero and the second blending region (22) is adapted to adjust a diffraction efficiency from the second diffractive add power to a diffractive add power of zero in a radially outward direction.

8. Spectacle lens design data according to claim 7, wherein the second blending region (22) is based on a bifocal diffraction efficiency having a non-zero diffraction efficiency in a diffraction order corresponding to the second diffractive add power and a non-zero diffraction efficiency in the zeroth diffractive order.

9. Spectacle lens design data according to claim 2, wherein the uniform refractive power is adjusted to provide a focus in front of the retina of the wearer, and wherein the central region (12) has a negative diffractive add power such that a combination of the uniform refractive power and the negative diffractive add power in the central region is adjusted for emmetropia of the wearer.

10. Spectacle lens design data according to claim 9, wherein the peripheral region (14) has a diffractive add power of zero.

11. Spectacle lens design data according to any one of the preceding claims, wherein the first blending region (20), the peripheral region (14) and, if dependent on claim 7 or 8, the edge region (24) and the second blending region (22) correspond to different viewing angles of a wearer waring a spectacle lens manufactured according to a spectacle lens design according to any one of the preceding claims.

12. Data set in the form of a computer-readable data signal comprising at least one kind of the following kinds of data:
(i) a virtual representation of the spectacle lens (10) configured for the purpose of use for manufacturing the spectacle lens (10) according to any one of the preceding claims;
(ii)data containing computer-readable instructions for controlling one or more manufacturing machines to manufacture the spectacle lens (10) according to any one of the preceding claims.

13. Computer-readable storage medium having stored thereon a data set according to claim 12.

14. Method (600) being configured for generating by computer means a spectacle lens design data for a spectacle lens (10), the spectacle lens design data being adjusted such that the spectacle lens (10) has a refractive power and at least partly a diffractive add power and providing:
+ a central region (12) having a first diffractive add power and being adjusted for emmetropia of the wearer; and
+ a peripheral region (14) arranged radially outside of the central region (12), wherein the peripheral region (14) has a second diffractive add power and is adjusted to provide a focus (202) in at least one of in front of the retina (18) of the wearer or behind the retina (18) of the wearer;
**characterized in that** the spectacle lens design data is adjusted such that the spectacle lens (10) further exhibits:
+ a first blending region (20) arranged between the central region (12) and the peripheral region (14), wherein the first blending region (20) is adapted to adjust a diffraction efficiency from the first diffractive add power to the second diffractive add power in a radially outward direction.

15. Method (600) according to claim 14 being further configured to manufacture a spectacle lens (10) using the spectacle lens design data.
